# EUROPÄISCHE PATENTSCHRIFT

(11) **EP 2 305 603 B1**
(45) Veröffentlichungstag und Bekanntmachung des Hinweises auf die Patenterteilung: **23.04.2014**
(21) Anmeldenummer: 09012553.5
(22) Anmeldetag: 05.10.2009
(51) Int. Cl.: C01B 33/26, C04B 12/04, C04B 111/00, C01B 33/32

(54) **Aluminium-haltige Wasserglaslösungen**
Soluble glass solutions containing aluminium
Solutions de silicates de potassium à teneur en aluminium

(43) Veröffentlichungstag der Anmeldung: 06.04.2011
(73) Patentinhaber: Cognis IP Management GmbH, 40589 Düsseldorf (DE)
(72) Erfinder: Bohlander, Ralf, 40699 Erkrath (DE)

(56) Entgegenhaltungen:
- WO-A2-2004/014813
- US-A1- 2004 018 146

## Beschreibung

### Gebiet der Erfindung

Die Erfindung betrifft klare langfristig lagerstabile Lösungen von Alkalisilikaten (Wassergläsern) mit einem Aluminiumgehalt von mindestens 0,5% sowie ein Verfahren zur Herstellung dieser Lösungen.

### Stand der Technik

Unter Wasserglas versteht der Fachmann bekanntlich aus dem Schmelzfluß erstarrte, glasige, wasserlösliche Alkalisilikate (also Alkalisalze von Kieselsäuren) oder deren viskose wässrige Lösungen. Beim Wasserglas kommen typischerweise 1 bis 5 mol SiO₂ auf 1 mol Alkalioxid (Alk₂O - wobei Alk die Alkalimetalle Lithium, Natrium und Kalium bedeutet), weshalb die Natron- und Kaliwassergläser üblicherweise auch durch den Quotienten %SiO₂ zu %Alkalioxid charakterisiert werden. Wassergläser sind mithin chemisch Alkalisilikate mit einem Molverhältnis (MV) SiO₂ zu Alk₂O im Bereich von 1 bis 5, wobei unter diesem Molverhältnis das Molverhältnis der das Alkalisilikat konstituierenden Bausteine SiO₂ und Alk₂O zu verstehen ist. Sie enthalten oligomere Silikatanionen mit Alkalimetallkationen als Gegenionen.

Wassergläser sind in reinem Zustand farblose Gläser, die mit Wasser bei erhöhter Temperatur und Druck kolloidale klare, alkalisch reagierende Lösungen bilden. Wasserglas wird üblicherweise durch Zusammenschmelzen von Quarzsand mit Soda oder Pottasche bei 1400 bis 1500 °C hergestellt, wobei die Kieselsäure das CO2 austreibt. Die erstarrte Schmelze wird entweder in gemahlenem Zustand in den Handel gebracht oder in eine wässrige Lösung gewünschter Konzentration überführt. Wässrige Lösungen haben den Vorteil besserer Applizierbarkeit in einer Reihe unterschiedlicher anwendungstechnischer Felder.

Flüssige Wasserglaslösungen, d.h. wässrige Lösungen von Alkalisilikaten, werden großtechnisch aus festem Alkalisilikat-Stückenglas durch deren Druckverlösung in Autoklaven in Wasser hergestellt. Alternativ kann Sand auch direkt hydrothermal in konzentrierter Alkalilauge gelöst werden, wobei jedoch nur Lösungen mit geringerem MV erhalten werden können.

Wie dem Fachmann bekannt, entsteht bei der Herstellung von Wasserglas im Schmelzofen zunächst eine Schmelze aus Alkalisilikat, welche beim Abkühlen auf Raumtemperatur zu Glasstücken (sogenanntes Stückenglas) erstarrt. Diese Glasstücke werden technisch in Druckautoklaven in Wasser gelöst, üblicherweise bei erhöhter Temperatur, etwa bei ca. 120°C (sogenannter Löseprozess). Technische Wasserglaslösungen enthalten üblicherweise einen Feststoffanteil von ca. 30 bis 50% Gew.-%.

Zur Herstellung technischer Wassergläser wird mangels mengenmäßiger Verfügbarkeit in der Regel kein Reinstquartz als SiO₂-Rohstoffquell eingesetzt, sondern Sand, daher enthalten Wasserglaslösungen technischer Qualität üblicherweise bestimmte Metalle im Spurenbereich. Marktgängige Wasserglaslösungen enthalten daher unabhängig vom Herstellweg Rohstoff-bedingt metallische Verunreinigungen, wobei diese bei klaren, lagerstabilen wässrigen Lösungen in Summe unterhalb von 0,3% und beim Aluminium unterhalb von 0,2% - meist deutlich darunter - liegen; wie üblich sind diese %-Angaben als Gew.-% des entsprechenden Metalloxides bezogen auf die gesamte wässrige Lösung des Alkalisilikates zu verstehen. Der Grund, warum der Gehalt an "metallischen Verunreinigungen" in Wassergläsern nur derart gering ist, ist darin zu sehen, dass nur "reine" Alkalisilikate wasserlöslich sind, jedoch bereits sehr geringe Anteile 2- oder 3-wertiger Metallkationen wasserunlösliche Verbindungen bilden. Da unlösliche Anteile wegen deren Separationsneigung bei fast allen Anwendungen stören, werden sie in der Technik durch Sedimentation, Zentrifugation oder Filtration absepariert, um klar durchsichtige lagerstabile Wasserglaslösungen zu erhalten.

Es ist ferner allgemein bekannt, dass Wasserglaslösungen sehr empfindlich schon auf Zugabe geringer Mengen von Aluminium-haltigen Lösungen reagieren, zumeist durch sofortige Vergelung und zeitverzögerte Ausfällung von Feststoffen. Somit besteht eine prinzipielle Schwierigkeit, wenn man den Gehalt von Wasserglaslösungen an Aluminium auf einen Wert oberhalb von etwa 0,2-0,3% (Gew.-% Al₂O₃ bezogen auf die gesamte wässrige Lösung des Alkalisilikates) einstellen möchte. Dies wurde in eigenen Untersuchungen der Anmelderin bestätigt. Dabei hat die Anmelderin festgestellt, dass auch der Versuch einer Direktsynthese von klaren wässrigen Alkalisilikatlösungen mit höherem Aluminiumgehalt aus den kostengünstigen Rohstoffen Sand, NaOH und einer Aluminiumquelle über den hydrothermalen Herstellweg scheitert.

Mischungen von Wasserglaslösungen mit Aluminatlösungen werden großtechnisch eingesetzt, um Aluminosilikate als amorphe Molekularsiebe oder kristalliner Zeolite herzustellen. Dies beleuchtet aus anderer Perspektive die genannte Schwierigkeit, klare Wasserglaslösungen mit erhöhtem Aluminiumgehalt herzustellen. Denn wie Untersuchungen der Anmelderin bestätigt haben führt das Zusammengeben von Wasserglaslösungen mit Aluminatlösungen zu Ausfällung bzw. Kristallisation, wobei die Flüssigphase an Aluminium abgereichert wird, so dass nach beendeter Ausfällung eine Alkalisilikatlösung fast ohne Al-gehalt als Mutterlauge überbleibt.

Mitra, Transaction Ind.Ceram.Soc, Vol XXXI 1972, S.31ff beschreibt Alk/Si/Al-Variationen in weiten Bereichen, Verdünnungen und Temperaturen im Bereich von 0-95°C, jedoch mit dem Ergebnis, dass alle Mischungen vergelen oder nach spätestens 24 Stunden trübe werden.

**Ueda indiziert in** American Mineralogist, V64, 1979, S172ff, dass es auch klare Lösungen von Aluminaten in Wasserglaslösungen geben kann, allerdings mit der Einschränkung, dass dies nur bei Al₂O₃/SiO₂-Verhältnissen im Bereich von 1:70 bis 1:320 möglich ist, was for eine gängige Wasserglaslösung mit einem Alkalisilikat-Feststoffgehalt von 40 Gew.-% rechnerisch bedeutet, dass Al₂O₃ nur maximal mit 0,4 Gew.-% enthalten sein kann. Dieser Stand der Technik bestätigt also den Fachmann in der ihn bekannten Tatsache, dass es extrem schwierig ist, klare langfristig lagerstabile und nicht vergelende wässrige Lösungen von Alkalisilikaten (Wassergläsern) mit einem merklichen Aluminiumgehalt herzustellen und deutet allenfalls an, dass es möglich sein könnte, solche Lösungen mit einem maximalen Aluminiumgehalt von 0,4 Gew.-% herzustellen.

WO 2004/014813 A2 beschreibt klare wässrige Lösungen für feuerfeste Verglasungen enthaltend ein Alkalimetall Silikat (Wasserglas), ein wasserlösliches Aluminat und eine Hydroxycarbonsäure.

US 2004/018146 A1 beschreibt feine A-Typ Zeolith Partikel mit einem mittleren Durchmesser von 0,1 Mikrometer oder weniger und einem Variationskoeffizienten von 90% oder weniger, wobei das Verhältnis eines Peaks über dem Hintergrund-Level zu gesamten Peak-Fläche im Bereich von 2-Theta = 20° bis 40° in einem Pulver X-ray Diffraktionsspektrum des genannten feinen A-Typ Zeolith Partikel 30% oder mehr beträgt.

### Beschreibung der Erfindung

Aufgabe der vorliegenden Erfindung war es, klare wässrige Lösungen von Silikaten (Wassergläsern) mit einem Aluminiumgehalt von mindestens 0,5 Gew.-% (Gew.-% Al₂O₃ bezogen auf die gesamte wässrige Lösung des Silikates) bereitzustellen. Die Lösungen sollten lagerstabil über einen Zeitraum von mindestens 6 Monaten bei 20 °C sein, d.h. innerhalb dieses Zeitraumes klar bleiben und nicht vergelen bzw. zu Ausfällungen führen.

Der Anmelderin ist es nun gelungen, die genannte Aufgabenstellung zu lösen, obwohl der Stand der Technik dies als außerordentlich schwierig, wenn nicht praktisch unmöglich nahe legt.

Gegenstand der Erfindung ist zunächst ein Verfahren zur Herstellung klarer, bei 20 °C mindestens 6 Monate lagerstabiler, wässriger Lösungen von Silikaten (Wassergläsern) bestehend aus
- 20 bis 40 Gew.-% SiO₂,
- 10 bis 20 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
- 0,5 bis 6 Gew.-% Al₂O₃ und
- Wasser,
   wobei man
- eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet, vorlegt und
- eine Aluminiumverbindung mit einer solchen Geschwindigkeit zudosiert, dass die Viskosität der Reaktionsmischung unterhalb von 10.000 mPas bleibt und wobei man die Reaktion in einem Temperaturbereich von 20 bis 140 °C durchführt,
- mit der Maßgabe, dass man die Reaktionsmischung nach Zudosierung der Gesamtmenge der Aluminiumverbindung auf Raumtemperatur abkühlt, sobald die Reaktionsmischung klar ist.

Die Viskositätsangabe wird dabei unter Reaktionsbedingungen und Reaktionstemperatur nach ISO 12058-1gemessen.

Vorzugsweise wird die Reaktion unter Rühren durchgeführt.

Die nach dem erfindungsgemäßen Verfahren erhältlichen Al-haltigen Silikatlösungen werden vorzugsweise auf eine Viskosität von mindestens 100 mPas und insbesondere eine Viskosität im Bereich von 100 bis 1.000 mPas eingestellt (bei diesen Angaben ist jeweils die Viskosität der Silikatlösungen als solche bei 20 °C gemeint, gemessen nach der Methode gemäß ISO 12058-1). Die Einstellung der Viskosität geschieht dabei im Wesentlichen durch die Wahl der Konzentrationen der Reaktanden.

Das erfindungsgemäße Verfahren garantiert, dass die erhaltenen wässrigen Aluminium-haltigen Silikatlösungen trotz ihres hohen Aluminiumgehaltes einkomponentig und klar sind, nicht vergelen und klar bleiben und keinen Bodensatz bilden und dies über einen Zeitraum von mindestens 6 Monaten bei 20 °C, was eine ganz ausgezeichnete Lagerstabilität bedeutet. Dies ist angesichts des geschilderten Standes der Technik als außerordentlich überraschend anzusehen.

Besonders bevorzugt ist es, die Reaktion in einem Temperaturbereich von 50 bis 110°C und insbesondere von 60 bis 80°C durchzuführen. Gerade der Temperaturbereich von 60 bis 80°C garantiert besonders langfristig lagerstabile Silikatlösungen.

Wie ausgeführt sieht das erfindungsgemäße Verfahren als kritischen Schritt vor, eine wässrige Lösung eines wie oben definierten Silikates (Wasserglas) vorzulegen und eine Aluminiumverbindung mit einer solchen Geschwindigkeit zuzudosieren, dass die Viskosität der Reaktionsmischung unterhalb von 10.000 mPas bleibt. Hierdurch wird ausgedrückt, dass die Geschwindigkeit der Zugabe der Aluminiumquelle ein sehr wichtiger Parameter ist. Gibt man nämlich die Aluminiumquelle zu schnell zu mit der Folge, dass die Viskosität der Reaktionsmischung den angegebenen Wert übersteigt, so erhält man keine klaren und langfristig lagerstabilen Lösungen. Die Aluminiumquelle darf also gemäß dem erfindungsgemäßen Verfahren nur so schnell zudosiert werden, dass die Viskosität der Reaktionsmischung ständig unterhalb von 10.000 mPas bleibt. Vorzugsweise dosiert man die Aluminiumquelle mit einer solchen Geschwindigkeit zu, dass die Viskosität der Reaktionsmischung unterhalb von 1.000 mPas bleibt.

Die Natur der einzusetzenden Silikate (Wassergläser) ist an sich nicht kritisch. Vorzugsweise setzt man Alkalisilikate ein, also solche Verbindungen M₂O x nSiO₂, bei denen M für ein Kation aus der Gruppe Li⁺, Na⁺ oder K⁺ steht und wobei n eine Zahl im Bereich von 1 bis 5 ist. Vorzugsweise setzt man dabei solche Alkalisilikate ein, die ein n im Bereich von 1 bis 3 und insbesondere von 1,6 bis 2,8 liegt. Ganz besonders bevorzugt ist es, Natriumsilikat einzusetzen.

Die Aluminiumquelle ist an sich nicht kritisch. Vorzugsweise setzt man ionische Aluminiumverbindungen und insbesondere anorganische Aluminiumsalze als Aluminiumquelle (oben als "Aluminiumverbindungen" bezeichnet) ein. Beispiel hierfür sind Aluminiumhydroxid, Aluminiumoxid, Natriumaluminiumdioxid oder Alaune.

Aluminiumhydroxid ist im Rahmen der vorliegenden Erfindung ganz besonders als Aluminiumquelle bevorzugt. Es kann einerseits in fester Form eingesetzt werden, wobei dann gilt, dass es in feinverteilter Form vorliegen muss und zwar mit einer Korngrösse unterhalb von 1µm.

Vorzugsweise wird es jedoch in Form einer wässrigen Lösung eingesetzt (Aluminat-Lösung). Dabei setzt man insbesondere Aluminatlösungen mit einem Aluminiumgehalt im Bereich von 10 bis 22 % ein (%-Angabe bedeutet Gew.-% Al₂O₃ bezogen auf die Gesamtheit der wässrigen Aluminatlösung).

Wie oben ausgeführt kühlt man die Reaktionsmischung nach Zudosierung der Gesamtmenge der Aluminiumverbindung auf Raumtemperatur (worunter hier ein Temperaturbereich von 5 bis 30 °C und insbesondere 20 bis 25 °C verstanden wird) ab, sobald sie Reaktionsmischung klar ist. Dies ist ein wichtiges Merkmal für den Erfolg des Verfahrens. In der Praxis bedeutet dies, dass während der Zugabe der Aluminiumquelle zur vorgelegten Wasserglaslösung in aller Regel eine Trübung der Reaktionsmischung auftritt. Sobald die gesamte Menge der Aluminiumverbindung zudosiert ist, ist es wichtig, die Reaktionsmischung optisch daraufhin zu prüfen (Sichtkontrolle), wann sie klar wird. Sobald sie klar wird, leitet man die Abkühlung ein. Der Zeitpunkt, wann die Reaktionsmischung klar wird kann von der Geschwindigkeit der Zudosierung der Aluminiumquelle und der Reaktionstemperatur abhängen. Sollte er nicht mit dem Ende der Zugabe der Aluminiumquelle oder kurz darauf erfolgen, so wird die Reaktionsmischung einfach bei der bisherigen Reaktionstemperatur weiter gerührt, bis sie klar wird, danach wird abgekühlt.

Vorzugsweise erfolgt die Abkühlung der Reaktionsmischung - wie angegeben nach vollständiger Zugabe der Aluminiumquelle - unmittelbar nachdem sie klar geworden ist.

In einer Ausführungsform bestehen die wässrigen Lösungen von Silikaten (Wassergläsern) aus
- 25 bis 35 Gew.-% SiO₂,
- 12 bis 16 Gew.-% Alk₂O, wobei Alk Lithium, Natrium oder Kalium bedeutet, und
- 0,5 bis 3 Gew.-% Al₂O₃.

In einer weiteren Ausführungsform bestehen die wässrigen Lösungen von Silikaten (Wassergläsern) aus
- 25 bis 35 Gew.-% SiO₂,
- 12 bis 16 Gew.-% Alk₂O, wobei Alk Lithium, Natrium oder Kalium bedeutet, und
- 1,0 bis 2,5 Gzw.-% Al₂O₃.

Der Feststoffgehalt der erfindungsgemäßen Al-haltigen wässrigen Lösungen von Silikaten (Wassergläsern) beträgt vorzugsweise 25-50 Gew.-% und insbesondere 35-45 Gew.-%.

Ein weiterer Gegenstand der Erfindung sind zunächst klare, bei 20 °C mindestens 6 Monate lagerstabile, wässrige Lösungen von Silikaten (Wassergläsern) bestehend aus
- 20 bis 40 Gew.-% SiO₂,
- 10 bis 20 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
- 0,5 bis 6 Gew.-% Al₂O₃ und
- Wasser,
wobei diese Lösungen erhältlich sind, indem man
- eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von bis 5 bedeutet, vorlegt und
- eine Aluminiumverbindung mit einer solchen Geschwindigkeit zudosiert, dass die Viskosität der Reaktionsmischung unterhalb von 10.000 mPas bleibt und wobei man die Reaktion in einem Temperaturbereich von 20 bis 140 °C durchführt,
- mit der Maßgabe, dass man die Reaktionsmischung nach Zudosierung der Gesamtmenge der Aluminiumverbindung auf Raumtemperatur abkühlt, sobald sie Reaktionsmischung klar ist.

Die nach dem erfindungsgemäßen Verfahren zugänglichen Al-haltigen Silikatlösungen können in den unterschiedlichsten Anwendungsfeldern verwendet werden. Beispiele hierfür sind: Brandschutzbeschichtungsmittel, Hilfsmittel zur Agglomeration,

### Beispiele

### Abkürzungen:

VE-Wasser = vollentsalztes Wasser
FS = Feststoffgehalt
GV = Gewichtsverhältnis SiO₂ / Alkalioxid bei Alkaliwassergläsern

### Erfindungsgemäße Beispiele

### Beispiel 1:

In eine 500ml Edelstahl Druckbombe wurden 400g Natronwasserglas 60 (46% FS, GV=2) (Fa Cognis) vorgelegt, mit einem Magnetfischrührer gerührt, und in die Rührthrombe 10g Aluminiumhydroxid KB30 (Fa Alcoa) eingestreut. Druckdicht verschlossen wurde auf einer Heizplatte auf 120°C erhitzt. Nach Erreichen von 120°C wurde sofort wieder auf Raumtemperatur abgekühlt und die leicht opaque Lösung über ein 50µ Sieb zu einer klar transparenten Lösung abfiltriert.

| | | |
|---|---|---|
| Analytik: 30% SiO₂ | 14,5% Na₂O | 1,3% Al₂O₃ |

### Beispiel 2:

In einen Erlenmeyerkolben wurden 200g Natronwasserglas 48/50 (45% FS, GV=2,7) (Fa Cognis) mit 30g Natronlauge 50% (Fluka) mit einem Magnetfischrührer zu einer klaren schlierenfreien Lösung vermischt. In die Rührthrombe wurden 7g feinteiliges Aluminiumhydroxid (Apyral 200SM, Fa Nabaltec) eingestreut. Mit einer Heizplatte wurde die weiß trübe Mischung auf 100°C/Rückfluß erhitzt. Innerhalb einer halben Stunde entstand eine fast transparente Mischung. Nach Abkühlen auf Raumtemperatur wurde über ein 50µ Sieb abfiltriert.

| | | |
|---|---|---|
| Analytik: 28% SiO₂ | 15% Na₂O | 1,8% Al₂O₃ |

### Beispiel 3:

In einen Erlenmeyerkolben wurden 135g Portil A (Natronwasserglaspulver 80% FS, GV=2) (Fa. Cognis) und 100 ml VE-Wasser mit einem Magnetfischrührer zu einer Suspension vermischt. In die Rührthrombe wurden 4g feinteiliges Aluminiumhydroxid (Apyral 200SM, Fa Nabaltec) eingestreut. Mit einer Heizplatte wurde die weiß trübe Mischung auf 100°C/Rückfluß erhitzt. Innerhalb einer halben Stunde entstand eine fast transparente Mischung. Nach Abkühlen auf Raumtemperatur wurde über ein 50µ Sieb abfiltriert.

| | | |
|---|---|---|
| Analytik:31% SiO₂ | 15,5% Na₂O | 1% Al₂O₃ |

### Beispiel 4:

In einen Erlenmeyerkolben wurden 200g Natronwasserglas 48/50 (45% FS, GV=2,7) (Fa Cognis) mit 30g Natronlauge 50% (Fluka) mit einem Magnetfischrührer zu einer klaren schlierenfreien Lösung vermischt und auf 40°C erwärmt. In die Rührthrombe wurden 50g Natriumaluminatlösung (Gecedral, Fa Giulini) innerhalb einer Stunde eingetropft. Die wegen Gelpartikeln trübe Mischung wurde auf 80°C erhitzt. Innerhalb einer Stunde entstand eine transparente Mischung. Nach Abkühlen auf Raumtemperatur wurde über ein 50µ Sieb abfiltriert.

| | | |
|---|---|---|
| Analytik: 28% SiO₂ | 15,5% Na₂O | 4% Al₂O₃ |

### Beispiel 5:

In einen Erlenmeyerkolben wurden 200g Natronwasserglas 50/52 (48% FS, GV=2,4) (Fa Cognis) vorgelegt und eine 40g Soda-Wasser-Mischung (50%FS, Fa. Solvay) zugetropft und mit einem Magnetfischrührer vermischt und auf 50°C erwärmt. In die Rührthrombe wurden 26g Natriumaluminatlösung (38%, Fa Nordisk) innerhalb einer Stunde eingetropft. Dann wurde auf 80°C erhitzt. Innerhalb von 15 Minuten entstand eine transparente Mischung. Nach Abkühlen auf Raumtemperatur wurde über ein 50µ Sieb abfiltriert.

| | | |
|---|---|---|
| Analytik: 28% SiO₂ | 12,5% Na₂O | 2% Al₂O₃ |

### Beispiel 6:

In einen Erlenmeyerkolben wurden 170g Natronwasserglas 50/52 (48% FS, GV=2,4) (Fa Cognis) mit 30g Kaliwasserglas 54 (52% FS, GV 1,42) mit einem Magnetfischrührer zu einer klaren schlierenfreien Lösung vermischt und auf 40°C erwärmt. In die Rührthrombe wurden 22g Natriumaluminatlösung (Gecedral , Fa Giulini) innerhalb einer Stunde eingetropft. Die wegen Gelpartikeln trübe Mischung wurde auf 80°C erhitzt. Innerhalb einer halben Stunde entstand eine transparente Mischung. Nach Abkühlen auf Raumtemperatur wurde über ein 50µ Sieb abfiltriert.

| | | | |
|---|---|---|---|
| Analytik: 30% SiO₂ | 10,5% Na₂O | 3% K₂O | 1,9% Al₂O₃ |

### Beispiel 7:

In einem Becherglas wurden 30g Natriumaluminatlösung (aluminl0; Fa. Remondis) und 20g Wasser vorgelegt mit einem Metallblattrührer gerührt auf 40°C erhitzt. Innerhalb 30 Minuten wurden 200g Natronwasserglas 54/56 (55% FS, GV 2,05) eingetropft. Die Mischung wurde auf 80°C erhitzt. Innerhalb einer Stunde entstand eine transparente Mischung. Nach Abkühlen auf Raumtemperatur wurde über ein 10µ Filter abfiltriert.

| | | |
|---|---|---|
| Analytik: 30,5% SiO₂ | 16% Na₂O | 2,6% Al₂O₃ |

### Beispiel 8:

In einen Erlenmeyerkolben wurden in 75g VE-Wasser, 90g Natronlauge 50% (Fluka), 5,5g Lithiumhydroxid-hydrat (Fa. FMC) und 80g Köstrosolid 0403 (gefällte Kieselsäure, Fa Köstritz) mit einem Magnetfischrührer zu einer Suspension vermischt. In die Rührthrombe wurden 8g feinteiliges Aluminiumhydroxid (Apyral 200SM, Fa Nabaltec) eingestreut. Mit einer Heizplatte wurde die weiß trübe Mischung auf 100°C unter Rückfluß erhitzt. Innerhalb einer halben Stunde entstand eine fast transparente Mischung. Nach Abkühlen auf Raumtemperatur wurde über ein 50 µ Sieb abfiltriert.

| | | | |
|---|---|---|---|
| Analytik: 30% SiO₂ | 14% Na₂O | 1,5% Li₂O | 2,6% Al₂O₃ |

Alle hergestellten Lösungen der Fallbeispiele bleiben bei Raumtemperaturlagerung stabil, ohne Separation oder Kristallisation.

### Vergleichsbeispiele

Die beiden nachfolgenden Vergleichsbeispiele V4-1 und V4-2 dienen dem Vergleich zum obigen erfindungsgemäßen Beispiel 4:

### Vergleichsbeispiel V4-1

In einen Erlenmeyerkolben wurden 200g Natronwasserglas 48/50 (45% FS, GV= 2,7) (Fa. Cognis) mit 30g Natronlauge 50% (Fluka) mit einem Magnetfischrührer zu einer klaren schlierenfreien Lösung vermischt und auf 90°C erwärmt. In die Rührthrombe wurden 50g Natriumaluminatlösung (Gecedral , Fa Giulini) innerhalb einer Stunde eingetropft. Die trübe Mischung wurde für 2 Stunden auf 100°C erhitzt. Die Trübung der Mischung wandelte sich nicht in Richtung klar, Weiteres Nachrühren führte zu noch mehr Eintrübung. Die so erhaltene Mischung konnte wegen Filterverblockung selbst über ein 200µ Sieb nicht filtriert werden. Die auf Raumtemperatur abgekühlte Lösung wurde beim stehen lassen weißlich trübe, nach ca. 3 Wochen begann sich ein weißer Bodensatz abzutrennen.

### Vergleichsbeispiel V4-2

In einen Erlenmeyerkolben wurden 200g Natronwasserglas 48/50 (45% FS, GV=2,7) (Fa. Cognis) mit 30g Natronlauge 50% (Fluka) mit einem Magnetfischrührer zu einer klaren schlierenfreien Lösung vermischt. Zur Viskositätsabsenkung wurden 40g Wasser zugegeben. In die Rührthrombe wurden 60g Natriumaluminatlösung (Gecedral , Fa Giulini) innerhalb einer Stunde eingetropft. Die Trübung der Mischung wandelte sich nicht in Richtung klar, weder durch weiteres Nachrühren, durch Filtration oder Erwärmen. Die weißlich trübe Dispersion neigte schon nach Tagen zur Auftrennung.

## Patentansprüche

1. Verfahren zur Herstellung klarer, bei 20 °C mindestens 6 Monate lagerstabiler, wässriger Lösungen von Silikaten (Wassergläsern) bestehend aus
● 20 bis 40 Gew.-% SiO₂,
● 10 bis 20 Gew.-% M₂O, wobei M ein Kation aus der Gruppe Li*, Na⁺, K⁺, NY₄⁺ ist und Y einen Alkyl- oder Alkenylrest mit 1 bis 6 C-Atomen bedeutet,
● 0,5 bis 6 Gew.-% Al₂O₃ und
● Wasser,
wobei man
● eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet, vorlegt und
● eine Aluminiumverbindung mit einer solchen Geschwindigkeit zudosiert, dass die Viskosität der Reaktionsmischung unterhalb von 10.000 mPas bleibt und wobei man die Reaktion in einem Temperaturbereich von 20 bis 140°C durchführt,
● mit der Massgabe, dass man die Reaktionsmischung nach Zudosierung der Gesamtmenge der Aluminiumverbindung auf Raumtemperatur abkühlt, sobald die Reaktionsmischung klar ist.

2. Verfahren nach Anspruch 1, wobei M ein Kation aus der Gruppe Li⁺, Na⁺, K⁺ bedeutet.

3. Verfahren nach Anspruch 1, wobei M das Kation Na+ bedeutet und das in der Reaktion eingesetzte Natriumsilikat die Formel Na₂O x nSiO₂ hat, wobei n eine Zahl im Bereich 1,6 bis 2,8 bedeutet.

4. Verfahren nach Anspruch 1 oder 2, wobei man als Aluminiumverbindung Aluminiumhydroxid einsetzt.

5. Verfahren nach Anspruch 4, wobei man Aluminiumhydroxid in Pulverform einsetzt, wobei dessen Korngröße unterhalb von 1 µm liegt.

6. Verfahren nach Anspruch 4, wobei man Aluminiumhydroxid in Form einer wässrigen Lösung (Aluminatläsung) einsetzt.

7. Verfahren nach einem der Ansprüche 1 bis 5, wobei man die Reaktion in einem Temperaturbereich von 60 bis 80 °C durchführt.

8. Verfahren nach einem der Ansprüche 1 bis 6, wobei man die Aluminiumverbindung mit einer solchen Geschwindigkeit zudosiert, dass die Viskosität der Reaktionsmischung unterhalb von 1,000 mPas bleibt.

9. Klare, bei 20 °C mindestens 6 Monate lagerstabile, wässrige Lösungen von Silikaten (Wassergläsern) bestehend aus
• 20 bis 40 Gew.-% SiO₂,
• 10 bis 20 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
• 0,5 bis 6 Gew.-% Al₂O₃ und
• Wasser,
wobei diese Lösungen erhältlich sind, indem man
• eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C+Atomen und n eine Zahl im Bereich von 1 bis 5 bedeutet, vorlegt und
• eine Aluminiumverbindung mit einer solchen Geschwindigkeit zudosiert, dass die Viskosität der Reaktionsmischung unterhalb von 10.000 mPas bleibt und wobei man die Reaktion in einem Temperaturbereich von 20 bis 140 °C durchführt,
• mit der Massgabe, dass man die Reaktionsmischung nach Zudosierung der Gesamtmenge der Aluminiumverbindung auf Raumtemperatur abkühlt, sobald die Reaktionsmischung klar ist.

## Claims

1. Process for preparing clear aqueous solutions of silicates (water glasses) which consist of
• from 20 to 40% by weight of SiO₂,
• from 10 to 20% by weight of M₂O, where M is a cation selected from the group consisting of Li⁺, Na⁺, K⁺, NY₄⁺ and Y is an alkyl or alkenyl radical having from 1 to 6 carbon atoms,
• from 0.5 to 6% by weight of Al₂O₃ and
• water
and are stable on storage at 20°C for at least six months,
wherein
• an aqueous solution of a silicate (water glass) of the general formula M₂O x nSiO₂, where M is a cation selected from the group consisting of Li⁺, Na⁺, K⁺, NY₄⁺ and Y is an alkyl or alkenyl radical having from 1 to 6 carbon atoms and n is in the range from 1 to 5, is placed in a reaction vessel and
• an aluminum compound is introduced at such a rate that the viscosity of the reaction mixture remains below 10 000 mPas and the reaction is carried out in a temperature range from 20 to 140°C,
• with the proviso that the reaction mixture after introduction of the total amount of the aluminum compound is cooled to room temperature as soon as the reaction mixture is clear.

2. Process according to Claim 1, wherein M is a cation selected from the group consisting of Li⁺, Na⁺, K⁺.

3. Process according to Claim 1, wherein M is the cation Na⁺ and the sodium silicate used in the reaction has the formula Na₂O x nSiO₂, where n is in the range from 1.6 to 2.8.

4. Process according to Claim 1 or 2, wherein aluminum hydroxide is used as aluminum compound.

5. Process according to Claim 4, wherein aluminum hydroxide is used in the form of a powder whose particle size is below 1 µm.

6. Process according to Claim 4, wherein aluminum hydroxide is used in the form of an aqueous solution (aluminate solution).

7. Process according to any of Claims 1 to 5, wherein the reaction is carried out in the temperature range from 60 to 80°C.

8. Process according to any of Claims 1 to 6, wherein the aluminum compound is introduced at such a rate that the viscosity of the reaction mixture remains below 1000 mPas.

9. Clear aqueous solutions of silicates (water glasses) which consist of
• from 20 to 40% by weight of SiO₂,
• from 10 to 20% by weight of M₂O, where M is a cation selected from the group consisting of Li⁺, Na⁺, K⁺, NY₄⁺ and Y is an alkyl or alkenyl radical having from 1 to 6 carbon atoms,
• from 0.5 to 6% by weight of Al₂O₃ and
• water
and are stable on storage at 20°C for at least six months,
wherein these solutions can be obtained by
• placing an aqueous solution of a silicate (water glass) of the general formula M₂O x nSiO₂, where M is a cation selected from the group consisting of Li⁺, Na⁺, K⁺, NY₄⁺ and Y is an alkyl or alkenyl radical having from 1 to 6 carbon atoms and n is in the range from 1 to 5, in a reaction vessel and
• introducing an aluminum compound at such a rate that the viscosity of the reaction mixture remains below 10 000 mPas and carrying out the reaction in the temperature range from 20 to 140°C,
• with the proviso that the reaction mixture after introduction of the total amount of the aluminum compound is cooled to room temperature as soon as the reaction mixture is clear.

## Revendications

1. Procédé pour la préparation de solutions aqueuses limpides, stables au stockage pendant au moins 6 mois à 20 °C, de silicates (verres solubles) constituées de
• 20 à 40 % en poids de SiO₂,
• 10 à 20 % en poids de M₂O, M étant un cation choisi dans le groupe constitué par Li⁺, Na⁺, K⁺, NY₄⁺ et Y représentant un radical alkyle ou alcényle ayant de 1 à 6 atomes de carbone,
• 0,5 à 6 % en poids d'Al₂O₃ et
• d'eau
dans lequel
• on dispose au préalable une solution aqueuse d'un silicate (verre soluble) de formule générale M₂O × nSiO₂, dans laquelle M est un cation choisi dans le groupe constitué par Li⁺, Na⁺, K⁺, NY₄⁺ et Y représentant un radical alkyle ou alcényle ayant de 1 à 6 atomes de carbone et n représente un nombre dans la plage de 1 à 5, et
• on ajoute un composé d'aluminium par addition dosée à une vitesse telle que la viscosité du mélange réactionnel se maintient au-dessous de 10 000 mPa.s et en effectuant la réaction dans une plage de température de 20 à 140 °C,
• étant entendu qu'après addition dosée de la quantité totale du composé d'aluminium on refroidit le mélange réactionnel jusqu'à la température ambiante, dès que le mélange réactionnel est limpide.

2. Procédé selon la revendication 1, dans lequel M représente un cation choisi dans le groupe constitué par Li⁺, Na⁺, K⁺.

3. Procédé selon la revendication 1, dans lequel M représente le cation Na⁺ et le silicate de sodium utilisé dans la réaction correspond à la formule Na₂O x nSiO₂, dans laquelle n représente un nombre dans la plage de 1,6 à 2,8.

4. Procédé selon la revendication 1 ou 2, dans lequel on utilise comme composé d'aluminium l'hydroxyde d'aluminium.

5. Procédé selon la revendication 4, dans lequel on utilise l'hydroxyde d'aluminium sous forme de poudre, la taille de grain de ce dernier étant inférieure à 1 µm.

6. Procédé selon la revendication 4, dans lequel on utilise l'hydroxyde d'aluminium sous forme d'une solution aqueuse (solution d'aluminate).

7. Procédé selon l'une quelconque des revendications 1 à 5, dans lequel on effectue la réaction dans une plage de température de 60 à 80 °C.

8. Procédé selon l'une quelconque des revendications 1 à 6, dans lequel on ajoute le composé d'aluminium par addition dosée à une vitesse telle que la viscosité du mélange réactionnel se maintient au-dessous de 1 000 mPa.s.

9. Solutions aqueuses limpides, stables au stockage pendant au moins 6 mois à 20 °C, de silicates (verres solubles) constituées de
• 20 à 40 % en poids de SiO₂,
• 10 à 20 % en poids de M₂O, M étant un cation choisi dans le groupe constitué par Li⁺, Na⁺, K⁺, NY₄⁺ et Y représentant un radical alkyle ou alcényle ayant de 1 à 6 atomes de carbone,
• 0,5 à 6 % en poids d'Al₂O₃ et
• d'eau
ces solutions pouvant être obtenues en
• disposant au préalable une solution aqueuse d'un silicate (verre soluble) de formule générale M₂O × nSiO₂, dans laquelle M est un cation choisi dans le groupe constitué par Li⁺, Na⁺, K⁺, NY₄⁺ et Y représentant un radical alkyle ou alcényle ayant de 1 à 6 atomes de carbone et n représente un nombre dans la plage de 1 à 5, et
• en ajoutant un composé d'aluminium par addition dosée à une vitesse telle que la viscosité du mélange réactionnel se maintient au-dessous de 10 000 mPa.s et en effectuant la réaction dans une plage de température de 20 à 140 °C,
• étant entendu qu'après addition dosée de la quantité totale du composé d'aluminium on refroidit le mélange réactionnel jusqu'à la température ambiante, dès que le mélange réactionnel est limpide.
